# EUROPEAN PATENT SPECIFICATION

(11) **EP 2 084 564 B1**
(45) Date of publication and mention of the grant of the patent: **21.06.2017**
(21) Application number: 06808578.6
(22) Date of filing: 17.11.2006
(51) Int. Cl.: G02B 6/38, G02B 6/44

(54) **A METHOD OF INSTALLING AN OPTICAL FIBRE UNIT**
VERFAHREN ZUM INSTALLIEREN EINER FASEROPTISCHEN EINHEIT
PROCÉDÉ D'INSTALLATION D'UNE UNITÉ DE FIBRE OPTIQUE

(43) Date of publication of application: 05.08.2009
(73) Proprietor: Prysmian Cables & Systems Limited, Eastleigh Hampshire SO50 6YU (GB)
(72) Inventor: LE DISSEZ, Arnaud, Hampshire SO50 6YU (GB)
(74) Representative: Whitlock, Holly Elizabeth Ann
(86) International application number: PCT/GB2006/004290
(87) International publication number: WO 2008/059188

(56) References cited:
- WO-A-00/28366
- WO-A-2004/088382
- GB-A- 2 424 128

## Description

### Field of the Invention

The present invention relates to a method of installing an optical fibre unit.

In particular, the present invention relates to a method of installing an optical fibre unit by blowing along a conduit at least one partially pre-terminated optical fibre.

The present invention further relates to a partially pre-terminated optical fibre which is suitable for being used in a blown optical fibre installation.

### Background to the Invention

Optical fibre cables are a common medium across which to implement a network. In fact, optical fibre cables can carry much greater bandwidth signals than other transmission media, such as conventional electrical transmissions. Therefore, developments in optical fibre installations have seen a move from traditional cable installations using heavy, reinforced cables to the use of blown fibre techniques.

Optical fibre is increasingly being used for a variety of broadband applications including voice, video and data transmission. As a result there is a need for connecting remote locations to a fibre optical distribution cable in order to provide broadband services to an end user. In this regard, optical fibre networks are being developed that deliver "fibre-to-the curb" (FTTC), "fibre-to-the-business" (FTTB), "fibre-to-the-home" (FTTH) and "fibre-to-the-business" (FTTP), referred to generically as FTTx networks.

Typically, a blown fibre technique requires that an optical fibre cable containing at least one empty tube is employed, the fibre unit of the optical fibre cable being installed by blowing with compressed air into said empty tube.

The installation of an optical fibre unit by blowing through an empty tube of a pre-installed optical cable is known, for example, from document EP-108,590. According to this document, a fibre unit is installed by using fluid drag of a gaseous medium which passes through the empty tube in the desired direction of advance. This technique, which is known as Blown Fibre or Fibre Blowing, uses distributed viscous drag forces to install a fibre unit which is supported on a cushion of air.

According to the blown fibre technique, since the fibre optical cable is installed first without any optical fibres therein (conveniently by using any traditional cable installation techniques) and since there is no significant stress imposed on the fibre unit during blowing, it is possible to use very lightweight fibre units. Indeed, in terms of space-saving and routing flexibility it is desirable if the fibre unit is both small and flexible.

A fibre unit generally comprises a plurality of optical fibres which are held together by a common coating. Alternatively, a fibre unit comprises a single optical fibre that is surrounded by a coating. Preferably, said coating is made from a low density polymeric material so as to facilitate blowing thereof. Conveniently, the coating is made from a foamed polymeric material.

An optical fibre cable for blown technology generally comprises one or more tubes within which the fibre units are blown, said tubes being assembled together by means of an outer protective sheath.

In a blown fibre installation, at the ingress of a customer's premise, a gas connector is generally interposed between a first optical fibre cable, external to the premise, and a second optical fibre cable, internal to the premise.

The gas connector ensures that gas and water sealing is provided between the fibre unit and the cable tube through which the fibre unit is blown. Therefore, the gas connector prevents gas and water from traveling through the tube of a first optical fibre cable and through the tube of a second optical fibre cable, thereby preventing gas and water from entering the customer's premise. Examples of gas connectors (gas block connecters) known in the art are the products sold by John Guest Group and marketed under the name GB-88-01; GB-85-01 and GB-55-01 on the basis of the tube outer diameter.

It is important to provide a network which is as flexible as possible, so that connections can be easily modified between different branches of the network as needed.

Creating connections between branches is relatively easy in an electrical transmission network and simple techniques - such as mechanical welding or soldering - can be used to provide electrical joints which are largely free of electrical losses.

On the contrary, due to the small size of the optical fibres and the high degree of alignment which is necessary to minimise losses as the optical signal transfers from the core of one fibre to the core of another fibre, creating connections in optical fibre networks is much more complex. To provide broadband services to an end user, FTTx networks need to include a large number of interconnection points at which one or more optical fibres of a distribution cable are interconnected or mated to optical fibres of one or more cables leading to an end user's location.

A method for creating a connection between the optical fibres of a network is the fusion splicing method. Fusion splicing creates stable joints between two optical fibres by welding the abutting ends thereof, typically by using an electrical arc which melts the fibre ends to be spliced. This method is particularly advantageous where single mode optical fibres are to be joined thanks to the low loss on the transmitted signal which can be obtained. Although this technique is able to provide cheap joints, the machine that is used for creating the joints is quite expensive and, furthermore, the splicing process is quite complex for having to be carried out in the field. Moreover, fusion splicing creates a permanent joint which reduces the flexibility of the network since the optical fibres can not be disconnected and then reconnected in other permutations without creating a further fusion splice.

A further method for creating a connection between two optical fibres of a network is the "index matching gel" method. This method consists in guiding and aligning the fibres inside a sleeve which allows the abutting ends thereof to physically contact and to hold in position. An "index matching gel" is interposed between the abutting ends of the two optical fibres, said gel favouring the passage of the light (optical signal) from the first optical fibre to the second optical fibre. This method results in being less expensive and complex than the fusion splicing method.

A further method for creating a connection between two optical fibres belonging to an optical network (optical installation) is the fibre termination method which advantageously contributes in increasing the network flexibility. According to this method, after an optical fibre has been blown through a conduit, an optical connector is associated to the optical fibre end to be joined. The optical connector is a mechanical device which allows aligning and joining of two or more optical fibres so that the optical fibres of two distinct axially adjacent optical fibre cables can be joined, or the optical fibres of a given optical fibre cable can be attached to - and decoupled from - a fibre optic device, e.g. a joint closure.

Generally, an optical connector comprises a ferrule and a connector body.

The ferrule acts as a fibre alignment mechanism and comprises a long and thin cylinder that is bored through the centre thereof for receiving an optical fibre end to be joined so that the longitudinal axis of the optical fibre is centrally located within the ferrule. The ferrule is aligned with the optical fibre end and is firmly associated thereto, e.g. by glueing. Typically, the ferrule is made from a ceramic material, e.g. zirconia (zirconium oxide). Generally, the mechanical contact between the ferrule and the optical fibre is ensured by providing a metallic insert (i.e. a mechanical holder) which partially surrounds the optical fibre and the ferrule, said insert favouring a correct positioning and coupling of the ferrule to the connector body. Typically, the ferrule is provided with the insert attached thereto.

Once the ferrule and the insert have been provided to the optical fibre end so as to obtain a "ferruled optical fibre" (which is also indicated as "partially terminated optical fibre" in the following of the present description), a connector body is provided to surround and contact the ferruled optical fibre so that a connectorized optical fibre is finally obtained.

Generally, two connectorized optical fibres are connected (joined) together by interposing an adaptor which contributes in correctly aligning and firmly holding the two optical fibres to be joined. The adaptor typically comprises a sleeve and an adaptor body. The sleeve holds in alignment the ferrules (and the optical fibres contained thereinto) of the two connectorized optical fibres to be joined, while the adaptor body mates with the connector bodies which surround and bond to the corresponding ferrules. An adaptor is used also in the case a connectorized optical fibre is requested to be coupled to a fibre optic device, e.g. a joint closure.

With respect to the splicing techniques mentioned above (i.e. fusion splicing method and "index matching gel" method), the fibre termination method provides for a mechanically secure joint. Moreover, the optical connectors and the adaptors which are used in the fibre termination method contribute in stopping the fibre ends from rotating and grinding against each other, thereby providing an accurate alignment and mechanical contact between two optical fibre ends.

Furthermore, the fibre termination method allows that the connection (splice) between two optical fibres can be easily broken - if required - by simply disengaging the optical connectors from the adaptor. Therefore, if needed, the connection between two optical fibres can be quickly and simply reconfigured to join together different optical fibres by removing the connector bodies and the ferrules from the optical fibres.

In a conventional blown optical fibre installation, in the case the fibre termination method is used, an optical fibre unit is firstly blown through a conduit and, when exiting there from, the optical fibre unit is successively terminated by coupling an optical connector thereto.

The Applicant has noticed that the optical connectors currently available on the market are too heavy and too large to be blown along a conduit. As a consequence, the fibre termination process steps - which are needed for providing an optical connector to an optical fibre - have to be carried out directly in the field at the end of the optical fibre blowing step, i.e. when the optical fibre has already been blown and exits from the installation conduit.

As mentioned above, an optical connector is a fibre-to-fibre interconnection and aligns the fibre core of two optical fibres. Due to the fast development of optical nets, a variety of optical fibre connectors has been developed and is available on the market. The main difference between the known optical connectors is in the dimensions and the mechanical grip. Typical examples of standard connectors are the LC (Lucent Connector or Local Connector), FC, ST (Straight Tip), SC (an abbreviation for Subscriber Connector or Standard Connector) and E2000 connectors. If the fibre end is angled to reduce back reflections this is usually described by adding APC (Angled Physical contact Connector) to the name. Generally, a SC connector has an overall size which is comprised from about 5 mm to about 9 mm, while the inner diameter of a tube for blowing an optical fibre has an inner diameter generally comprised from about 2 mm to about 4 mm.

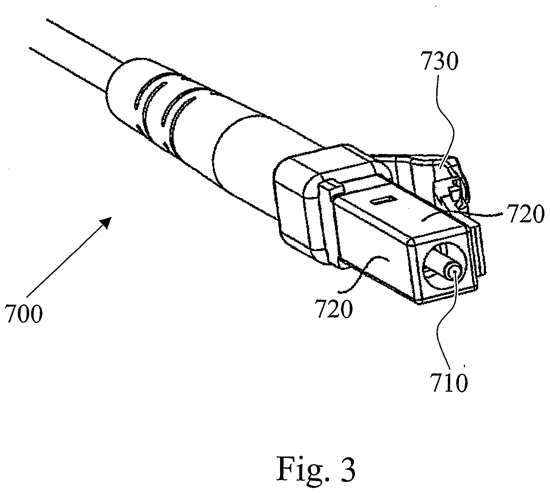

Figure 3 shows a typical SC connector 700. The SC connector is a snap-in connector that is widely used in single mode systems. The SC connector 700 has a substantially square shape and comprises a ferrule 710 which is surrounded by a connector body 720. The SC connector 700 further comprises a latch 730 for allowing safe coupling of the connector to an adaptor.

As mentioned above, the fibre termination method comprises the step of assembling a ferrule to the blown optical fibre. Generally, the step of assembling a ferrule to the blown optical fibre comprises the steps of: a) glueing the ferrule to the optical fibre; b) removing the excess of fibre (i.e. the optical fibre protruding from the ferrule end face); c) polishing the end face of the ferruled fibre (i.e. lapping step), and d) controlling the correct working of the ferruled fibre. Successively, the fibre termination process is completed by the step of associating a metallic insert to the ferrule and by the step of applying a connector body around and onto the metallic insert and the ferrule.

The Applicant has noticed that the fibre termination steps, particularly the steps of assembling the ferrule to an optical fibre, are very critical for a correct installation of an optical connector to an optical fibre and require the use of dedicated and complex apparata which need to be operated by the installers. However, as mentioned above, in the conventional blown fibre installations said critical termination process steps have to be carried out directly in the field, i.e. in unsafe and non-controlled environments, due to the impossibility of blowing an optical connector along the installation conduit. Moreover, the presence of very skilled installers directly in the field is requested for carrying out said critical termination process steps.

In addition, the Applicant has noted that, in order to reduce installation labour costs in FTTx networks, communications service providers are increasingly demanding factory-prepared interconnections solutions, commonly referred to as "plug-and-play" systems.

The Applicant has thus faced the problem of providing a method of installing an optical fibre unit which can be easily carried out by unskilled installers and which can advantageously decrease the installation time and costs.

WO 00/28366 discloses a method and an arrangement for installing in a duct optical fibre cable elements. In order to enable the cable element to be blown into a duct, an optical fibre ribbon cable body that has electrical contact devices provided at one end thereof and which comprises a plurality of optical fibre ribbons placed one upon the other has been held together with helically wound elastic tape.

WO 2004/088382 discloses a telecommunication distribution frame comprising a switch connected to an optical fibre of an incoming cable, terminated at a primary flexibility suite, via a secondary flexibility suite, where the primary and secondary flexibility suites include means for routing joined blown fibre tubes within the installation.

GB 242128 discloses an apparatus for installing, by the blown fibre technique, at least one optical fibre or optical fibre unit into a tube or cartridge which is contained within a pressure vessel, the length of optical fibre/optical fibre unit being pre-terminated at its inside tail by a connector.

GB 2 289 805 describes a method of providing a building or other location with an optical fibre element comprises introducing a leading end of the optical fibre element into the bore of a previously installed duct and propelling it along the duct by fluid drag of a gaseous medium, e.g. air. The fibre element is terminated with an optical connector at its leading end before it is introduced into the duct so that the element and connector are propelled along the duct together.

DE 20 2005 008 136 describes a waveguide cable has a single waveguide fibre which is surrounded by a cable cladding. The fibre is ready manufactured with a plug at at least one end of the cable or is part pre-manufactured with a plug part unit. At least the plug or the plug unit is surrounded by a protective sleeve.

EP 1 855 134, which is an Article 54(3) EPC document, describes a cable assembly for communication purposes, comprising a communication cable having a first free end, which cable can be passed through a cable guide from a starting position to an end position with its front end, and a communication connector, wherein the communication connector can be mounted to the first end of the communication cable in communicative contact with the optical fibre.

### Summary of the Invention

The Applicant has found that a partially terminated optical fibre, i.e. an optical fibre having a ferrule (and optionally an insert) coupled thereto, has overall dimensions and weight which allow the ferruled optical fibre to be blown through a conduit of a blown optical fibre installation.

The Applicant has found that, by providing the partially terminated optical fibre before blowing thereof, the more critical steps of the fibre termination process (in particular the step of assembling the ferrule to the optical fibre) can be carried out in the factory (i.e. in a clean and safe environment) by a very skilled technical personnel, while the remaining less critical fibre termination process steps (e.g. the step of applying the connector body or any further element which is needed for terminating the optical fibre) can be carried out directly in the field by unskilled installers.

In a first aspect, the present invention relates to a method of installing an optical fibre unit as set out in claim 1.

The Applicant has also found that by providing the partially terminated optical fibre with a non-metallic insert, instead of a metallic insert which is used in the conventional optical connectors currently available on the market, the weight of the partially pre-terminated optical fibre is advantageously decreased, thereby improving blowing thereof.

In a second aspect, the present invention relates to a partially terminated optical fibre as set out in claim 7.

### Brief Description of the Drawings

The present invention will now be described, by way of example only, with reference to the accompanying drawings, where like numerals are used to denote like components. In detail:
FIG. 1 is a schematic, partially cross-sectioned, lateral view of a ferruled optical fibre according to the present invention;
FIG. 2 is a schematic, partially cross-sectioned, lateral view of the connection area between two optical fibres, said fibres being connected according to the fibre termination method, and
FIG. 3 is a perspective view of a SC connector typically available on the market.

### Detailed Description of the Preferred Embodiments

### Brief Description of the Drawings

The present invention will now be described, by way of example only, with reference to the accompanying drawings, where like numerals arc used to denote like components. In detail:

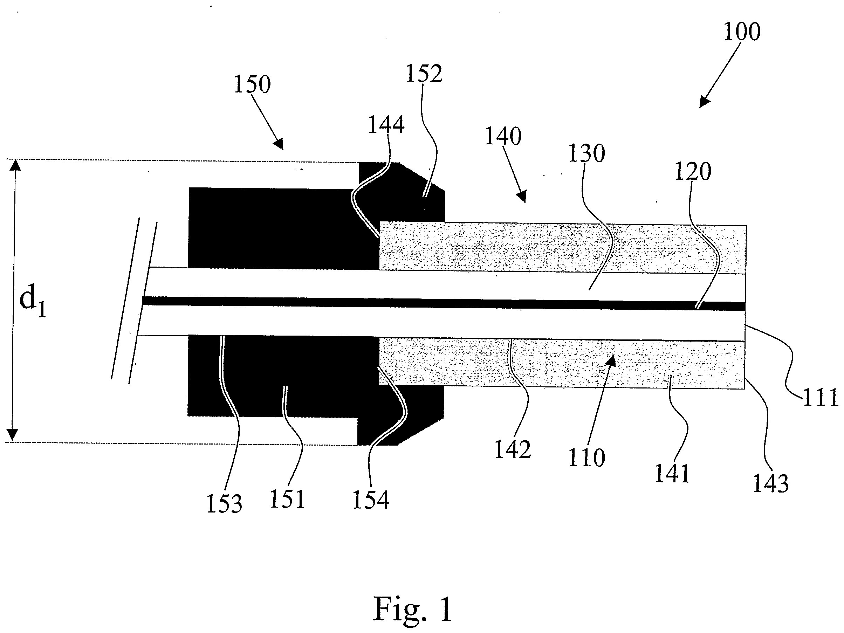

FIG. 1 is a schematic, partially cross-sectioned, lateral view of a ferruled optical fibre according to the present invention;

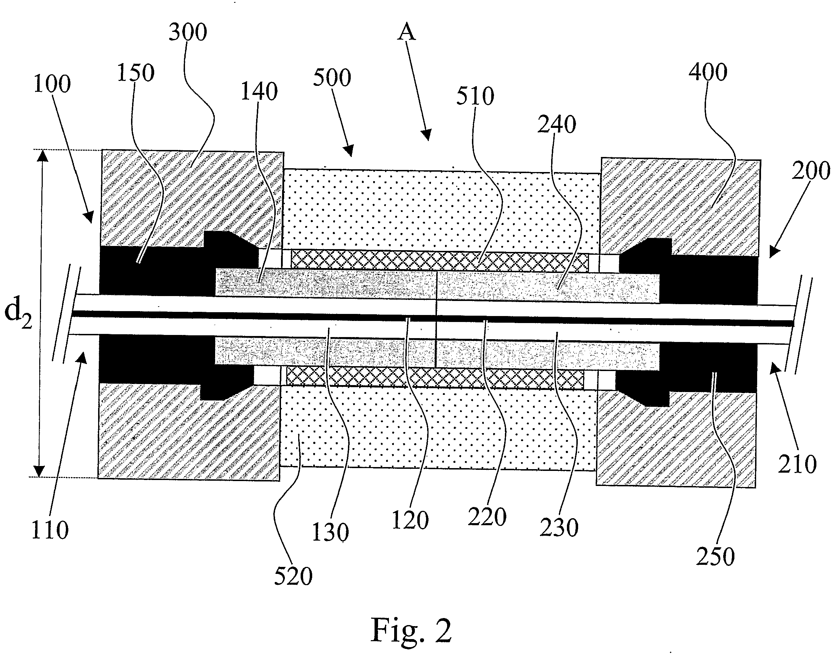

FIG. 2 is a schematic, partially cross-sectioned, lateral view of the connection area between two optical fibres, said fibres being connected according to the fibre termination method, and
FIG. 3 is a perspective view of a SC connector typically available on the market.

### Detailed Description of the Preferred Embodiments

Figure 1 shows a schematic, partially cross-sectioned, longitudinal view of a ferruled optical fibre 100 which is suitable for being blown through a conduit according to an embodiment of the present invention.

In detail, the ferruled optical fibre 100 comprises an optical fibre 110, a ferrule 140 and an insert 150.

The optical fibre 110 comprises an optical core 120, through which the optical signals travel, and a coating layer 130. The coating layer 130 surrounds the optical core 120 and ensures that the optical signals are substantially contained within the optical core by means of internal reflection at the interface between the optical core and the coating layer. Preferably, the coating layer 130 is made from a low density polymeric material so as to facilitate blowing thereof. Conveniently, the coating layer is made from a foamed polymeric material. The optical fibre 110 may typically be arranged as either a single-mode or a multi-mode optical fibre. Typically, the optical fibre 110 (a single-mode or a multi-mode optical fibre) has an outer diameter comprised from about 235 µm to about 255 µm. Typically, an optical core diameter of a single-mode optical fibre is comprised from about 8 µm to about 10 µm. Typically, an optical core diameter of a multi-mode optical fibre is comprised from about 45 µm to about 65 µm.

Generally, the ferrule 140 is a standard ferrule commonly available on the market for terminating optical fibres. Typically, the ferrule is made from a ceramic material, e.g. zirconia. Alternatively, the ferrule is made from a metallic material. The ferrule 140 comprises a cylindrical body 141 which is associated to the optical fibre end to be terminated (e.g. to be provided with an optical connector). The cylindrical body 141 is provided with a central longitudinal bore 142 for receiving and housing the optical fibre 110. The diameter of the longitudinal bore 142 substantially corresponds to the outer diameter of the optical fibre 110. The ferrule 140 is provided with a front surface 143 which is suitable for being received into an adaptor 500 (see Figure 2), the front surface 143 being substantially perpendicular to the bore longitudinal axis. The ferrule 140 is also provided with a rear surface 144 which is substantially perpendicular to the bore longitudinal axis. Preferably, the ferrule 140 is coupled to the optical fibre end by glueing.

According to the present description, the term "glueing" indicates coupling by means of an adhesive or, preferably, coupling by using a polymerized resin.

The insert 150 partially surrounds the optical fibre 110 and the ferrule 140 associated thereto, said insert favouring a correct positioning and coupling of the ferrule 140 to the connector body 300 (shown in Figure 2). The insert 150 comprises a cylindrical section 151 which extends into a frusto-conically shaped head section 152, the head section 152 being axially adjacent to the cylindrical section 151. The insert 150 is provided with a central longitudinally extending bore 153 which receives and houses the optical fibre 110. The bore 153 has a diameter which substantially corresponds to the outer diameter of the optical fibre 110. Preferably, the manufacturers provide the insert 150 already coupled to the ferrule 140. Preferably, the insert 150 is coupled to the ferrule 140 by mechanical interference (with a negative tolerance).

According to a preferred embodiment of the present invention, the insert 150 is made from a polymeric material which advantageously reduces the weight of the ferruled optical fibre 100, thereby rendering the latter particularly suitable for being blown along a conduit.

Preferably, the overall size d₁ of the insert 150 (and thus the maximum diameter of the ferruled optical fibre 100) according to the present invention is lower than 3 mm. More preferably, the overall size d₁ of the insert 150 is comprised from about 1.5 mm to about 2.5 mm.

According to a preferred embodiment of the present invention, the method of installing an optical fibre unit - which includes at least one optical fibre 110 - comprises the following steps.

The method comprises the step of inserting the optical fibre 110 through the longitudinal bore 153 of the insert 150 and through the longitudinal bore 142 of the ferrule 140 until the end edge 111 of the optical fibre 110 is positioned in correspondence of the front surface 143 of the ferrule 140.

The method further comprises the step of associating the ferrule 140 to the optical fibre 110 such that the optical core 120 is centrally located within the ferrule 140 and aligned thereto. Preferably, the ferrule 140 is chemically bonded to the optical fibre end. More preferably, the ferrule 140 is bonded to the optical fibre end by glueing. Alternatively, the ferrule 140 is arranged such that the rear surface 144 thereof comes to rest against the front surface 154 of the cylindrical section 151 of the insert 150.

The method further comprises the step of removing the optical fibre end which protrudes from the ferrule end face so that the front surface 143 of the ferrule 140 and the optical fibre end edge 111 are flush. Typically, the removing step is a cutting step. Preferably, the cutting step is carried out by using a fibre cutter.

The method further comprises the step of lapping the front surface 143 of the ferrule 140 and the optical fibre end edge 111 so as to polish the end face of the ferrule/optical fibre end assembly. The lapping step is carried out after the step of removing the optical fibre end which protrudes from the ferrule end face.

The method further comprises the step of positioning the insert 150 so as to surround and contact a portion of the ferrule 140 as well as the optical fibre 110. In detail, the insert 150 is superimposed to the ferrule portion in correspondence of the rear surface 144 of the ferrule 140, i.e. the ferrule axial end portion which is opposite to the ferrule end portion to be spliced. Moreover, the insert 150 is superimposed to the optical fibre portion which is axially adjacent to the rear surface 144 of the ferrule 140. Preferably, the insert 150 is chemically bonded to the optical fibre 110 and to the ferrule 140. More preferably, the insert 150 is coupled to the optical fibre 110 and to the ferrule 140 by glueing. Alternatively, the insert 150 is mechanically coupled to the optical fibre 110 and to the ferrule 140, e.g. by crimping.

Preferably, the method of the present invention further comprises the step of providing a cap onto the ferruled optical fibre 100. Preferably, the cap covers the ferrule 140 and at least a portion of the insert 150. The cap is advantageously provided so as to protect the ferruled optical fibre 100 during blowing thereof (e.g. from the dust possibly present inside the conduit or from any impact with the conduit walls) as well as during storage and transport of the ferruled optical fibre 100.

As mentioned above, the ferruled optical fibre 100 thus obtained can be advantageously manufactured prior to installation by very skilled technical people in a clean and controlled environment (e.g. in a factory or in a special workshop).

According to the present invention, the ferruled optical fibre 100, which is obtained according to the method described above, is suitable for being blown along a conduit.

At the end of the blowing step, the ferruled optical fibre 100 is provided with a connector body 300 (see Figure 2) so as to complete the termination of the optical fibre 110. The connector body 300 is positioned to surround and contact the insert 150. Preferably, the connector body 300 is mechanically secured to the insert 150. The overall diameter d₂ (see Figure 2) of a connector body 300 is generally comprised from about 5 mm to 9 mm, such a diameter value being too large to allow a connectorized optical fibre (i.e. an optical fibre provided with a complete optical connector which comprises the ferrule 140, the insert 150 and the connector body 300) to be blown along a conduit.

On the contrary, according to the method of the present invention, the connector body 300 is provided directly in the field while the ferruled optical fibre 100 (i.e. the optical fibre 100 provided with the ferrule 140 and the insert 150) - that is produced in the factory - has an overall dimension which is suitable for being blown along a conduit. Moreover, since the coupling of the connector body 300 to the ferruled optical fibre 100 is a very easy operation to be carried out, unskilled installers can be employed in the field, thereby advantageously decreasing the installation costs and time.

Figure 2 shows the connection area A between a first optical fibre 110 and a second optical fibre 210 which are connected (spliced) by using the fibre termination method.

In detail, according to the method of the present invention, a first ferruled optical fibre 100 is blown along a first conduit and a connector body 300 is successively coupled to the first ferruled optical fibre 100.

Figure 2 further shows a second ferruled optical fibre 200 which comprises a second optical fibre 210, a second ferrule 240 and a second insert 250. The second ferruled optical fibre 200 is possibly blown along a second conduit and a second connector body 400 is successively coupled to the second ferruled optical fibre 200. Alternatively, the second ferruled optical fibre 200 is provided with a second connector body 400 to obtain a second connectorized optical fibre, the latter being is part of an optical device, e.g. a joint closure.

According to the fibre termination method, the first and second ferruled optical fibres 100, 200 are spliced by means of an adaptor 500 which is interposed between the first and second ferruled optical fibres 100, 200 and which contributes in correctly aligning and firmly holding the two optical fibres 110, 210 to be joined. The adaptor 500 comprises a sleeve 510 and an adaptor body 520. The sleeve 510 surrounds and contacts the ferrules 140, 240 so as to hold them in alignment, thereby ensuring that the optical fibres 110, 210 are correctly aligned too. The adaptor body 520 is superimposed to the sleeve 510 and mates with the connector bodies 300, 400 so as to ensure a firm and correct engagement of the two connectorized optical fibres within the adaptor 500. The adaptor 500 provides for mechanical locking and/or anti-rotation means to properly retain the ferrules 140, 240 in place.

According to the method of the present invention, more than one ferruled optical fibres (e.g. at least two ferruled optical fibres) can be blown all at once along the same conduit.

### Blowing Test

A blowing test has been carried out by the Applicant to show that a ferruled optical fibre can be blown along a conduit.

A test track was used which included a conduit for blowing the ferruled optical fibre thereinto, a compressor for providing the air necessary for carrying out the blowing step and a conventional blowing head for blowing the ferruled optical fibre through the conduit.

The conduit had an outer diameter of 5 mm, an inner diameter of 3.5 mm and a length of 100 m.

The ferruled optical fibre to be blown along the conduit comprised an optical fibre, a ferrule and an insert.

The ferrule was made from a ceramic material and had an outer diameter of 1.25 mm.

The insert was made from polyurethane.

The ferruled optical fibre had an outer diameter (overall dimension) of 3.1 mm.

The drag fluid was air having a pressure of 6 bar.

The ferruled optical fibre was successfully blown through the whole 100 m length conduit.

The method of the present invention allows that an optical fibre which is terminated at both ends thereof is manufactured directly in the factory and provided to the technical personnel for the installation thereof.

The method of the present invention allows that the first end of an optical fibre is provided with an optical connector while the second end of the optical fibre is provided with at least one ferrule so as to obtain a ferruled optical fibre end, the first end being not requested to be blown along a conduit while the second end (i.e. the ferruled optical fibre end) can be suitably blown along a conduit thanks to the method of installing of the present invention.

The present invention is particularly advantageous with respect to the solutions currently available on the market which provide for an optical fibre that is terminated at only a first end thereof, the optical fibre second end being connectorized in the field for allowing the blowing of the optical fibre second end along a conduit.

As mentioned above, a further advantage of the present invention consists in that the steps of aligning, coupling and lapping the optical fibre end can be performed in a clean environment, away from the field and prior to installation. Moreover, once the ferruled optical fibre has been blown into a conduit, the ferruled optical fibre can be simply spliced to another optical fibre without the need for highly skilled installers since the critical steps mentioned above have already been carried out directly in the factory, thus resulting in greater efficiency and less chance of the splice becoming contaminated.

## Claims

1. A method of installing an optical fibre unit comprising at least one optical fibre (110; 210), said method comprising the steps of:
• providing a ferrule (140; 240) to the at least one optical fibre to obtain at least one partially terminated optical fibre end (100; 200), comprising an optical fiber end edge (111) whereby the ferrule (140; 240) has an axial end portion which is opposite to the optical fibre end edge (111);
• providing a non-metallic insert (150; 250) associated to the ferrule wherein said insert partially surrounds the optical fibre (110) and the ferrule (140), superimposed to the axial end portion of the ferrule, and is adapted for maintaining contact between the optical fibre and the ferrule and for coupling the ferrule (140) to a connector body (300) and blowing the partially terminated optical fibre end, where said end includes said ferrule and said insert, along a conduit; and
• providing the partially terminated optical fibre end (100; 200) with a connector body (300; 400), said step being carried out after the step of blowing, whereby the connector body (300; 400) is adapted to be positioned to surround and contact the insert (150; 250), wherein the insert (150; 250) comprises a cylindrical body section (151) and a head section (152).

2. The method of claim 1, wherein the step of providing a ferrule (140; 240) to the at least one optical fibre (110; 210) is carried out in a factory.

3. The method of claim 2, wherein the step of providing a ferrule (140; 240) to the at least one optical fibre (110; 210) comprises the step of chemically bonding the ferrule to at least one end of the optical fibre.

4. The method of claim 3, wherein the ferrule (140; 240) is glued to at least one end of the optical fibre (110; 210).

5. The method of claim 2, wherein the step of providing a ferrule (140; 240) to the at least one optical fibre (110; 210) comprises the step of mechanically coupling the ferrule to at least one end of the optical fibre.

6. The method of claim 2, further comprising the step of polishing an end face of the partially terminated optical fibre (100; 200).

7. A partially terminated optical fibre (100; 200) comprising:
• a ferrule (140; 240) associated to an end of the optical fibre (110; 210) comprising an optical fiber end edge (111), whereby the ferrule (140; 240) has an axial end portion which is opposite to the optical fibre end edge (111); **characterised by**
• a non-metallic insert (150; 250) associated to the ferrule, wherein said insert partially surrounds the optical fibre (110) and the ferrule (140), superimposed to the axial end portion of the ferrule, and is adapted for maintaining contact between the optical fibre and the ferrule and for coupling the ferrule (140) to a connector body (300); ;
wherein said end of the optical fibre having said ferrule and said insert is suitable for being blown along a conduit; and
wherein said end of the optical fibre having said ferrule and said insert is suitable for being provided with a connector body (300) to surround and contact the insert after being blown along a conduit, wherein the insert (150;250) comprises a cylindrical body section (151) and a head section (152).

8. The partially terminated optical fibre of claim 7, wherein the optical fibre (110; 210) is a single mode optical fibre.

9. The partially terminated optical fibre of claim 7, wherein the optical fibre is a multi mode optical fibre.

10. The partially terminated optical fibre of any one of claims 7 to 9, wherein the insert (150; 250) is made from a polymeric material.

## Patentansprüche

1. Verfahren zum Installieren einer faseroptischen Einheit, umfassend mindestens eine optische Faser (110; 210), wobei das Verfahren die nachstehenden Schritte umfasst:
Versehen der mindestens einen optischen Faser mit einer Hülse (140; 240), um mindestens ein teilweise begrenztes optisches Faserende (100; 200) zu erhalten, das eine faseroptische Endkante (111) umfasst, wobei die Hülse (140; 240) einen axialen Endabschnitt aufweist, der der faseroptischen Endkante (111) gegenüberliegt;
Bereitstellung eines nichtmetallischen Einsatzes (150; 250), der mit der Hülse verbunden ist, wobei der Einsatz die optische Faser (110) und die Hülse teilweise umgibt, dem axialen Endabschnitt der Hülse überlagert, und geeignet, den Kontakt zwischen der optischen Faser und der Hülse aufrechtzuerhalten und zur Verbindung der Hülse (140) mit einem Steckverbinderkörper (300) und zum Fortblasen des teilweise begrenzten optischen Faserendes, wobei das Ende die Hülse und den Einsatz einschließt, entlang eines Kanals; und
Versehen des teilweise begrenzten optischen Faserendes (100; 200) mit einem Steckverbinderkörper (300; 400), wobei der Schritt nach dem Schritt des Blasens durchgeführt wird, wodurch der Steckverbinderkörper (300, 400) geeignet ist, positioniert zu werden, den Einsatz (150; 250) zu umgeben und zu kontaktieren, wobei der Einsatz (150; 250) einen Zylinderkörperabschnitt (151) und einen Kopfabschnitt (152) umfasst.

2. Verfahren nach Anspruch 1, wobei der Schritt des Versehens der mindestens einen optischen Faser (110; 210) mit einer Hülse (140; 240) in einer Fabrik durchgeführt wird.

3. Verfahren nach Anspruch 2, wobei der Schritt des Versehens der mindestens einen optischen Faser (110; 210) mit einer Hülse (140; 240) den Schritt der chemischen Bindung der Hülse an mindestens ein Ende der optischen Faser umfasst.

4. Verfahren nach Anspruch 3, wobei die Hülse (140; 240) an mindestens ein Ende der optischen Faser geklebt wird.

5. Verfahren nach Anspruch 2, wobei der Schritt des Versehens der mindestens einen optischen Faser (110; 210) mit einer Hülse (140; 240) den Schritt der mechanischen Bindung der Hülse an mindestens ein Ende der optischen Faser umfasst.

6. Verfahren nach Anspruch 2, das des Weiteren den Schritt des Polierens einer Endfläche der teilweise begrenzten optischen Faser (100; 200) umfasst.

7. Teilweise begrenzte optische Faser (100; 200), umfassend:
eine mit einem Ende der optischen Faser (110; 210) verbundene Hülse (140; 240), umfassend eine faseroptische Endkante (111),
wobei die Hülse (140; 240) einen axialen Endabschnitt aufweist, der der faseroptischen Endkante (111) gegenüberliegt;
**gekennzeichnet durch**
einen nichtmetallischen Einsatzes (150; 250), verbunden mit der Hülse, wobei der Einsatz die optische Faser (110) und die Hülse (140) teilweise umgibt, den axialen Endabschnitt der Hülse überlagert, und geeignet ist, den Kontakt zwischen der optischen Faser und der Hülse aufrechtzuerhalten und zur Verbindung der Hülse (140) mit einem Steckverbinderkörper (300);
wobei das Ende der optischen Faser mit der Hülse und dem Einsatz geeignet ist, entlang eines Kanals geblasen zu werden; und
wobei das Ende der optischen Faser mit der Hülse und dem Einsatz geeignet ist, mit einem Verbinderkörper (300) versehen zu werden, um den Einsatz, nachdem er entlang eines Kanals geblasen wurde, zu umgeben und zu kontaktieren, wobei der Einsatz (150; 250) einen Zylinderkörperabschnitt (151) und einen Kopfabschnitt (152) umfasst.

8. Teilweise begrenzte optische Faser nach Anspruch 7, wobei die optische Faser (110; 210) eine optische Single-Mode-Faser ist.

9. Teilweise begrenzte optische Faser nach Anspruch 7, wobei die optische Faser eine optische Multi-Mode-Faser ist.

10. Teilweise begrenzte optische Faser nach einem der Ansprüche 7 bis 9,
wobei der Einsatz (150; 250) aus einem polymeren Material gefertigt ist.

## Revendications

1. Procédé d'installation d'une unité de fibres optiques comprenant au moins une fibre optique (110 ; 210), ledit procédé comprenant les étapes de :
• fourniture d'une férule (140 ; 240) à l'au moins une fibre optique pour obtenir au moins une extrémité de fibre optique partiellement terminée (100 ; 200), comprenant un bord d'extrémité de fibre optique (111) tel que la férule (140 ; 240) a une portion d'extrémité axiale qui est opposée au bord d'extrémité de fibre optique (111) ;
• fourniture d'un insert non métallique (150 ; 250) associé à la férule dans lequel ledit insert entoure partiellement la fibre optique (110) et la férule (140), superposé à la portion d'extrémité axiale de la férule, et est adapté pour maintenir un contact entre la fibre optique et la férule et pour coupler la férule (140) à un corps de connecteur (300),
et soufflage de l'extrémité de fibre optique partiellement terminée, où ladite extrémité comporte ladite férule et ledit insert, le long d'un conduit ; et
• fourniture à l'extrémité de fibre optique partiellement terminée (100 ; 200) d'un corps de connecteur (300 ; 400), ladite étape étant réalisée après l'étape de soufflage, telle que le corps de connecteur (300 ; 400) est adapté pour être positionné afin d'entourer et d'entrer en contact avec l'insert (150 ; 250), dans lequel l'insert (150 ; 250) comprend une section de corps cylindrique (151) et une section de tête (152).

2. Procédé selon la revendication 1, dans lequel l'étape de fourniture d'une férule (140 ; 240) à l'au moins une fibre optique (110 ; 210) est réalisée dans une usine.

3. Procédé selon la revendication 2, dans lequel l'étape de fourniture d'une férule (140 ; 240) à l'au moins une fibre optique (110 ; 210) comprend l'étape de liaison chimique de la férule à au moins une extrémité de la fibre optique.

4. Procédé selon la revendication 3, dans lequel la férule (140 ; 240) est collée à au moins une extrémité de la fibre optique (110 ; 210).

5. Procédé selon la revendication 2, dans lequel l'étape de fourniture d'une férule (140 ; 240) à l'au moins une fibre optique (110 ; 210) comprend l'étape de couplage mécanique de la férule à au moins une extrémité de la fibre optique.

6. Procédé selon la revendication 2, comprenant en outre l'étape de polissage d'une face d'extrémité de la fibre optique partiellement terminée (100 ; 200).

7. Fibre optique partiellement terminée (100 ; 200) comprenant :
• une férule (140 ; 240) associée à une extrémité de la fibre optique (110 ; 210) comprenant un bord d'extrémité de fibre optique (111), tel que la férule (140 ; 240) a une portion d'extrémité axiale qui est opposée au bord d'extrémité de fibre optique (111) ;
**caractérisée par**
• un insert non métallique (150 ; 250) associé à la férule, dans laquelle ledit insert entoure partiellement la fibre optique (110) et la férule (140), superposé à la portion d'extrémité axiale de la férule, et est adapté pour maintenir un contact entre la fibre optique et la férule et pour coupler la férule (140) à un corps de connecteur (300) ;
dans laquelle ladite extrémité de la fibre optique ayant ladite férule et ledit insert est appropriée pour être soufflée le long d'un conduit ; et
dans laquelle ladite extrémité de la fibre optique ayant ladite férule et ledit insert est appropriée pour être pourvue d'un corps de connecteur (300) pour entourer et entrer en contact avec l'insert après avoir été soufflée le long d'un conduit, dans laquelle l'insert (150 ; 250) comprend une section de corps cylindrique (151) et une section de tête (152).

8. Fibre optique partiellement terminée selon la revendication 7, dans laquelle la fibre optique (110 ; 210) est une fibre optique monomode.

9. Fibre optique partiellement terminée selon la revendication 7, dans laquelle la fibre optique est une fibre optique multimode.

10. Fibre optique partiellement terminée selon l'une quelconque des revendications 7 à 9, dans laquelle l'insert (150 ; 250) est réalisé à partir d'un matériau polymérique.
